# EUROPÄISCHE PATENTANMELDUNG

(11) **EP 3 805 998 A1**
(43) Veröffentlichungstag der Anmeldung: **14.04.2021**
(21) Anmeldenummer: 19202734.0
(22) Anmeldetag: 11.10.2019
(51) Int. Cl.: G06N 5/04

(54) **VERARBEITUNG VON SENSORDATEN IN EINEM KRAFTFAHRZEUG**

(71) Anmelder: Elektrobit Automotive GmbH, 91058 Erlangen (DE)
(72) Erfinder: Ohl, Sebastian, 65824 Schwalbach a. Ts. (DE)
(74) Vertreter: Continental Corporation

(57) **Zusammenfassung**

Die vorliegende Erfindung betrifft ein Verfahren, ein Computerprogramm mit Instruktionen und eine Vorrichtung zum Verarbeiten von Sensordaten in einem Kraftfahrzeug. Die Erfindung betrifft des Weiteren ein Assistenzsystem für ein Kraftfahrzeug, in dem ein erfindungsgemäßes Verfahren realisiert ist, sowie ein Kraftfahrzeug mit einem solchen Assistenzsystem. In einem ersten Schritt werden Sensordaten empfangen (10). Auf die Sensordaten wird zumindest ein Algorithmus angewandt (11), um ein erstes Zwischenergebnis zu ermitteln. Auf das erste Zwischenergebnis wird nachfolgend zumindest eine Regel angewandt (12), um ein zweites Zwischenergebnis zu ermitteln. Das zweite Zwischenergebnis wird dann in Hinblick auf eine Plausibilität evaluiert (13). Falls das zweite Zwischenergebnis nicht plausibel ist, werden eine oder mehrere der auf das erste Zwischenergebnis angewandten Regeln rückgängig gemacht (14), bis das zweite Zwischenergebnis plausibel ist. Das so erhaltene zweite Zwischenergebnis wird schließlich als Endergebnis ausgegeben (15).

## Beschreibung

Die vorliegende Erfindung betrifft ein Verfahren, ein Computerprogramm mit Instruktionen und eine Vorrichtung zum Verarbeiten von Sensordaten in einem Kraftfahrzeug. Die Erfindung betrifft des Weiteren ein Assistenzsystem für ein Kraftfahrzeug, in dem ein erfindungsgemäßes Verfahren realisiert ist, sowie ein Kraftfahrzeug mit einem solchen Assistenzsystem.

Bei der Umsetzung von Projekten betreffend die Verarbeitung von Sensordaten durch Steuergeräte werden nach der Implementierung der probabilistischen Anteile des Algorithmus oft harte Regeln eingeführt, um in Spezialfällen ein bestimmtes Verhalten zu erzeugen. Eine harte Regel sorgt dafür, dass bei Eintreten eines bestimmten Ereignisses eine diesem Ereignis zugeordnete Aktion ausgeführt wird. Diese Regeln erzeugen in den dafür vorgesehenen Szenarien die richtigen Anpassungen der Ausgaben. Oft stellt sich jedoch heraus, dass diese Regeln widersprüchlich sind oder bestimmte Kombinationen von Regeln zu nicht gewolltem Verhalten führen. Das Abstimmen der harten Regeln im Verarbeitungsprozess von Sensordaten ist daher eine schwierige Aufgabe. Dabei kann es dazu kommen, dass Regelsätze ausufern oder gewisse Probleme in seltenen Situationen akzeptiert werden.

Es ist eine Aufgabe der vorliegenden Erfindung, eine verbesserte Lösung für eine Verarbeitung von Sensordaten in einem Kraftfahrzeug bereitzustellen.

Diese Aufgabe wird durch ein Verfahren zum Verarbeiten von Sensordaten mit den Merkmalen des Anspruchs 1, durch ein Computerprogramm mit Instruktionen mit den Merkmalen des Anspruchs 7, durch eine Vorrichtung zum Verarbeiten von Sensordaten mit den Merkmalen des Anspruchs 5 sowie durch ein Assistenzsystem für ein Kraftfahrzeug mit den Merkmalen des Anspruchs 9 gelöst. Bevorzugte Ausgestaltungen der Erfindung sind Gegenstand der abhängigen Ansprüche.

Gemäß einem ersten Aspekt der Erfindung umfasst ein Verfahren zum Verarbeiten von Sensordaten in einem Kraftfahrzeug die Schritte:
- Empfangen von Sensordaten;
- Anwenden zumindest eines Algorithmus auf die Sensordaten zum Ermitteln eines ersten Zwischenergebnisses;
- Anwenden zumindest einer Regel auf das erste Zwischenergebnis zum Ermitteln eines zweiten Zwischenergebnisses;
- Evaluieren des zweiten Zwischenergebnisses in Hinblick auf eine Plausibilität;
- falls das zweite Zwischenergebnis nicht plausibel ist, Rückgängigmachen einer oder mehrerer der auf das erste Zwischenergebnis angewandten Regeln, bis das zweite Zwischenergebnis plausibel ist; und
- Ausgeben des zweiten Zwischenergebnisses als Endergebnis.

Gemäß einem weiteren Aspekt der Erfindung umfasst ein Computerprogramm Instruktionen, die bei Ausführung durch einen Computer den Computer zur Ausführung der folgenden Schritte zum Verarbeiten von Sensordaten in einem Kraftfahrzeug veranlassen:
- Empfangen von Sensordaten;
- Anwenden zumindest eines Algorithmus auf die Sensordaten zum Ermitteln eines ersten Zwischenergebnisses;
- Anwenden zumindest einer Regel auf das erste Zwischenergebnis zum Ermitteln eines zweiten Zwischenergebnisses;
- Evaluieren des zweiten Zwischenergebnisses in Hinblick auf eine Plausibilität;
- falls das zweite Zwischenergebnis nicht plausibel ist, Rückgängigmachen einer oder mehrerer der auf das erste Zwischenergebnis angewandten Regeln, bis das zweite Zwischenergebnis plausibel ist; und
- Ausgeben des zweiten Zwischenergebnisses als Endergebnis.

Der Begriff Computer ist dabei breit zu verstehen. Insbesondere umfasst er auch Steuergeräte und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Verarbeiten von Sensordaten in einem Kraftfahrzeug auf:
- einen Eingang zum Empfangen von Sensordaten;
- eine Datenverarbeitungseinheit zum Anwenden zumindest eines Algorithmus auf die Sensordaten zum Ermitteln eines ersten Zwischenergebnisses und zum Anwenden zumindest einer Regel auf das erste Zwischenergebnis zum Ermitteln eines zweiten Zwischenergebnisses;
- eine Evaluierungseinheit zum Evaluieren des zweiten Zwischenergebnisses in Hinblick auf eine Plausibilität, wobei die Datenverarbeitungseinheit eingerichtet ist, falls das zweite Zwischenergebnis nicht plausibel ist, eine oder mehrere der auf das erste Zwischenergebnis angewandten Regeln rückgängig zu machen, bis das zweite Zwischenergebnis plausibel ist; und
- einen Ausgang zum Ausgeben des zweiten Zwischenergebnisses als Endergebnis.

Bei der erfindungsgemäßen Lösung wird eine Nachevaluation der angewandten Regelsätze eingeführt. Dabei wird über eine Metrik evaluiert, ob die aus der Verarbeitung der Sensordaten resultierenden Ausgangsdaten plausibel sind. Beispielsweise können sich bei einer Fahrbahnschätzung die beiden Fahrbahnränder nicht kreuzen. Sind die Ausgangsdaten nicht plausibel, können einzelne Regeln rückgängig gemacht werden, bis ein plausibles Ergebnis vorliegt. Die Nachevaluation ermöglicht es so, die Auswirkungen von selten genutzten Regeln in falschen Situationen zu beheben. Der für die Umsetzung der erfindungsgemäßen Lösung benötigte zusätzliche Speicherbedarf und die zusätzliche Verarbeitungskomplexität für das Rückgängigmachen von Regeln fallen gegenüber dem Gewinn an Sicherheit nicht ins Gewicht.

Gemäß einem Aspekt der Erfindung stellen die Regeln zusätzlich zu einer Auswirkung auch eine inverse Auswirkung bereit. Dies vereinfacht das Rückgängigmachen von Regeln, da sich die Auswirkungen einer Regel auf einfache Weise wieder entfernen lassen. Beispielsweise können die Regeln ähnlich eines Command-Pattern [1] umgesetzt sein.

Gemäß einem Aspekt der Erfindung werden die auf das erste Zwischenergebnis angewandten Regeln in einer Liste verzeichnet. Jede Regel, die aktiviert wird, wird dieser Liste hinzugefügt und das Ergebnis der Verarbeitung der Sensordaten entsprechend angepasst. Durch die Verwendung einer Liste kann auf einfache Weise nachgehalten werden, welche Regeln konkret auf die Sensordaten in welcher Reihenfolge angewandt wurden.

Gemäß einem Aspekt der Erfindung sind die auf das erste Zwischenergebnis angewandten Regeln in der Liste nach einer Priorität der Regeln sortiert. Die Priorität einer Regel kann dabei davon abhängig sein, welche anderen Regeln angewandt wurden. Mithilfe einer Priorisierung der Regeln kann festgelegt werden, welche Regel in der aktuellen Situation vermutlich am unwahrscheinlichsten ist. Beim Rückgängigmachen von Regeln können dann basierend auf der sortierten Liste zunächst die Regeln mit niedriger Priorität rückgängig gemacht. Die Priorisierung vereinfacht somit die Entscheidung, in welcher Reihenfolge Regeln rückgängig gemacht werden sollen, sodass sich die Verarbeitungskomplexität reduziert.

Gemäß einem Aspekt der Erfindung erfolgt das Verarbeiten der Sensordaten für eine assistierte oder automatisierte Fahrfunktion. Durch die Nutzung der erfindungsgemäßen Lösung kann in diesem Zusammenhang u.a. erreicht werden, dass beispielsweise selten genutzte Regeln nicht in Situationen aktiviert werden, in denen ihre Aktivierung eher schadet anstatt hilfreich zu sein.

Vorzugsweise wird eine erfindungsgemäße Lösung in einem autonomen, teilautonomen oder mit Assistenzsystemen ausgestatteten Kraftahrzeug genutzt, z.B. in einem Personenkraftfahrzeug oder einem Nutzfahrzeug. Insbesondere kann die Nutzung der erfindungsgemäßen Lösung dabei durch ein Assistenzsystem erfolgen, z.B. durch ein System für eine assistierte oder automatisierte Fahrfunktion.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch einen typischen Ablauf einer Sensordatenverarbeitung in einem Steuergerät gemäß dem Stand der Technik;
- Fig. 2: zeigt schematisch ein Verfahren zum Verarbeiten von Sensordaten in einem Kraftfahrzeug;
- Fig. 3: zeigt schematisch eine erste Ausführungsform einer Vorrichtung zum Verarbeiten von Sensordaten in einem Kraftfahrzeug;
- Fig. 4: zeigt schematisch eine zweite Ausführungsform einer Vorrichtung zum Verarbeiten von Sensordaten in einem Kraftfahrzeug; und
- Fig. 5: zeigt schematisch einen Ablauf einer Sensordatenverarbeitung gemäß der Erfindung;
- Fig. 6: zeigt schematisch ein Kraftfahrzeug, in dem eine erfindungsgemäße Lösung realisiert ist.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

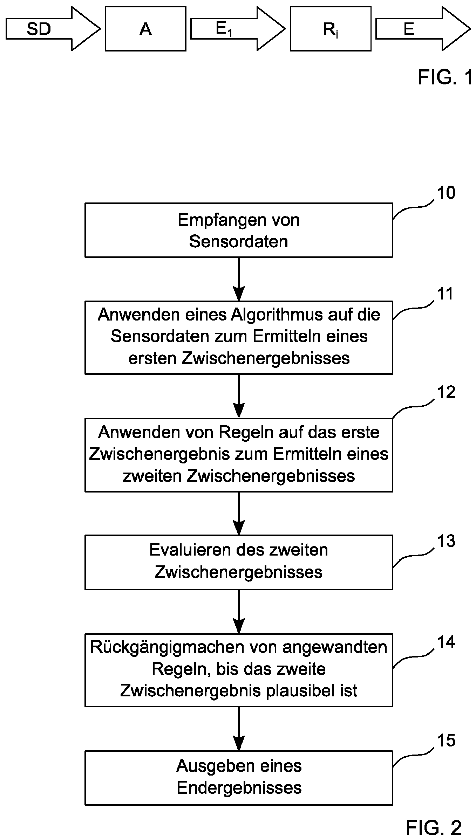

Fig. 1 zeigt schematisch einen typischen Ablauf einer Sensordatenverarbeitung in einem Steuergerät gemäß dem Stand der Technik. Auf die empfangenen Sensordaten SD wird zunächst zumindest ein Algorithmus A angewandt, z.B. ein probabilistischer Algorithmus. Dies führt zu einen Zwischenergebnis E₁, das in den meisten Fällen ausreichend ist. Zur Behandlung von Spezialfällen sind zusätzlich harte Regeln Rᵢ implementiert, die auf das Zwischenergebnis E₁ angewandt werden. Das aus der Anwendung der Regeln Rᵢ resultierende Ergebnis wird als Endergebnis E ausgegeben.

Fig. 2 zeigt schematisch ein Verfahren zum Verarbeiten von Sensordaten in einem Kraftfahrzeug, z.B. für eine assistierte oder automatisierte Fahrfunktion. In einem ersten Schritt werden Sensordaten empfangen 10. Auf die Sensordaten wird zumindest ein Algorithmus angewandt 11, um ein erstes Zwischenergebnis zu ermitteln. Auf das erste Zwischenergebnis wird nachfolgend zumindest eine Regel angewandt 12, um ein zweites Zwischenergebnis zu ermitteln. Das zweite Zwischenergebnis wird dann in Hinblick auf eine Plausibilität evaluiert 13. Falls das zweite Zwischenergebnis nicht plausibel ist, wird zumindest eine der auf das erste Zwischenergebnis angewandten Regeln rückgängig gemacht 14, bis das zweite Zwischenergebnis plausibel ist. Zu diesem Zweck können die Regeln zusätzlich zu einer Auswirkung auch eine inverse Auswirkung bereitstellen. Das so erhaltene zweite Zwischenergebnis wird schließlich als Endergebnis ausgegeben 15. Zum Vereinfachen des Rückgängigmachens können die auf das erste Zwischenergebnis angewandten Regeln in einer Liste verzeichnet werden, z.B. nach einer Priorität der Regeln sortiert. Die Priorität einer Regel kann dabei davon abhängig sein, welche anderen Regeln angewandt wurden.

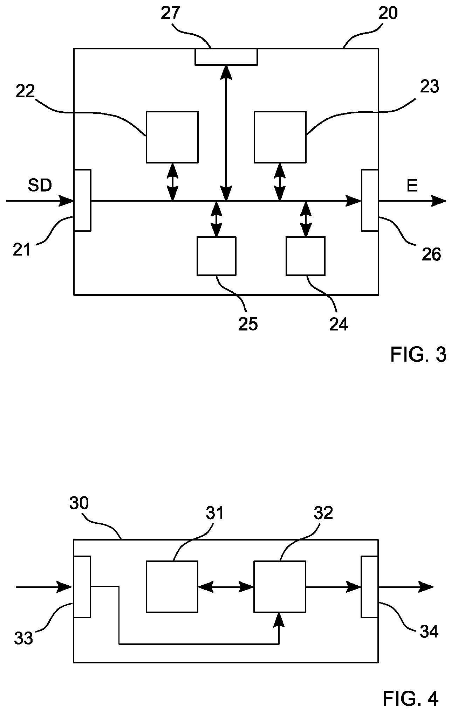

Fig. 3 zeigt eine vereinfachte schematische Darstellung einer ersten Ausführungsform einer Vorrichtung 20 zum Verarbeiten von Sensordaten in einem Kraftfahrzeug, z.B. für eine assistierte oder automatisierte Fahrfunktion. Die Vorrichtung 20 hat einen Eingang 21, über den Sensordaten SD empfangen werden können. Eine Datenverarbeitungseinheit 22 wendet zum Ermitteln eines ersten Zwischenergebnisses zumindest einen Algorithmus auf die Sensordaten an. Zudem wendet die Datenverarbeitungseinheit 22 zum Ermitteln eines zweiten Zwischenergebnisses zumindest eine Regel auf das erste Zwischenergebnis an. Eine Evaluierungseinheit 23 evaluiert das zweite Zwischenergebnis in Hinblick auf eine Plausibilität. Die Datenverarbeitungseinheit 22 ist dabei eingerichtet, eine oder mehrere der auf das erste Zwischenergebnis angewandten Regeln rückgängig zu machen, falls das zweite Zwischenergebnis nicht plausibel ist. Zu diesem Zweck können die Regeln zusätzlich zu einer Auswirkung auch eine inverse Auswirkung bereitstellen. Dieser Vorgang wird solange wiederholt, bis das zweite Zwischenergebnis plausibel ist. Das daraus resultierende zweite Zwischenergebnis wird schließlich als Endergebnis E zur weiteren Verarbeitung über einen Ausgang 26 der Vorrichtung ausgegeben. Zum Vereinfachen des Rückgängigmachens können die auf das erste Zwischenergebnis angewandten Regeln in einer Liste verzeichnet werden, z.B. nach einer Priorität der Regeln sortiert. Die Priorität einer Regel kann dabei davon abhängig sein, welche anderen Regeln angewandt wurden.

Die Datenverarbeitungseinheit 22 und die Evaluierungseinheit 23 können von einer Kontrolleinheit 24 gesteuert werden. Über eine Benutzerschnittstelle 27 können gegebenenfalls Einstellungen der Datenverarbeitungseinheit 22, der Evaluierungseinheit 23 oder der Kontrolleinheit 24 geändert werden. Die in der Vorrichtung 20 anfallenden Daten können bei Bedarf in einem Speicher 25 der Vorrichtung 20 abgelegt werden, beispielsweise für eine spätere Auswertung oder für eine Nutzung durch die Komponenten der Vorrichtung 20. Die Datenverarbeitungseinheit 22, die Evaluierungseinheit 23 sowie die Kontrolleinheit 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 26 können als getrennte Schnittstellen oder als eine kombinierte bidirektionale Schnittstelle implementiert sein.

Fig. 4 zeigt eine vereinfachte schematische Darstellung einer zweiten Ausführungsform einer Vorrichtung 30 zum Verarbeiten von Sensordaten in einem Kraftfahrzeug. Die Vorrichtung 30 weist einen Prozessor 32 und einen Speicher 31 auf. Beispielsweise handelt es sich bei der Vorrichtung 30 um einen Computer oder einen Grafikchip. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, insbesondere von Sensordaten von Sensoren des Kraftfahrzeugs. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Vorrichtungen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

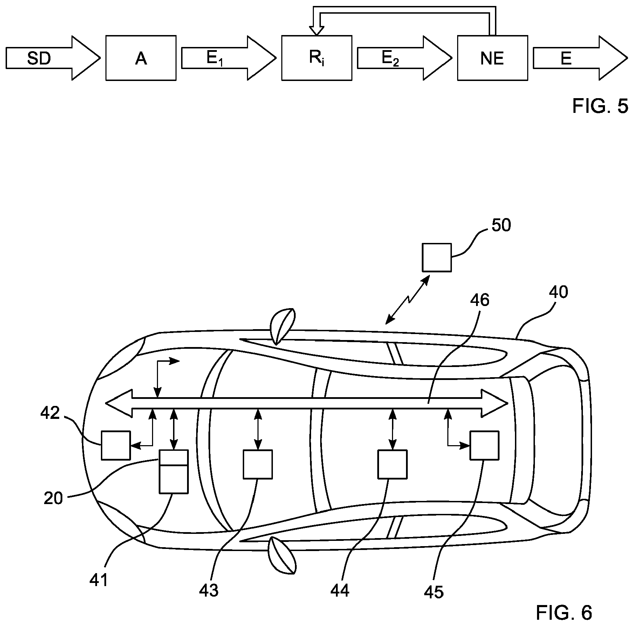

Fig. 5 zeigt schematisch einen typischen Ablauf einer Sensordatenverarbeitung gemäß der Erfindung. Wie schon in Fig. 1 wird auf die empfangenen Sensordaten SD zunächst zumindest ein Algorithmus A angewandt, um ein erstes Zwischenergebnis E₁ zu erhalten. Zur Behandlung von Spezialfällen werden im Anschluss harte Regeln Rᵢ auf das erste Zwischenergebnis E₁ angewandt. Anders als beim in Fig. 1 gezeigten Ablauf stellt das aus der Anwendung der Regeln Rᵢ resultierende Ergebnis aber ein zweites Zwischenergebnis E₂ dar. Bevor dieses als Endergebnis E ausgegeben wird, erfolgt eine Nachevaluation NE des angewandten Regelsatzes. Im Rahmen der Nachevaluation NE wird das zweite Zwischenergebnis E₂ in Hinblick auf eine Plausibilität evaluiert. Dabei kann die Anwendung einzelner Regeln rückgängig gemacht werden, bis ein plausibler Zustand hergestellt worden ist. Das daraus resultierende Zwischenergebnis E₂ wird schließlich als Endergebnis E ausgegeben.

Fig. 6 zeigt schematisch ein Kraftfahrzeug 40, in dem eine erfindungsgemäße Lösung realisiert ist. Bei dem Kraftfahrzeug 40 handelt es sich beispielsweise um ein autonomes, ein teilautonomes oder ein mit Assistenzsystemen ausgestattetes Kraftahrzeug. Das Kraftfahrzeug 40 weist zumindest ein Assistenzsystem 41 sowie eine Vorrichtung 20 zum Verarbeiten von Sensordaten für das Assistenzsystem 41 auf. Die Vorrichtung 20 kann natürlich auch in das Assistenzsystem 41 integriert sein. Das Kraftfahrzeug 40 weist zudem ein Sensorsystem 42 auf, mit dem Sensordaten erfasst werden können. Das Sensorsystem 42 kann insbesondere Sensoren zur Umfelderkennung umfassen, z.B. Ultraschallsensoren, Laserscanner, Radarsensoren, Lidarsensoren oder Kameras. Weitere Bestandteile des Kraftfahrzeugs 40 sind in diesem Beispiel ein Navigationssystem 43 sowie eine Datenübertragungseinheit 44. Mittels der Datenübertragungseinheit 44 kann eine Verbindung zu einem Backend 50 aufgebaut werden, z.B. zum Übermitteln von neuen oder aktualisierten Regeln. Zur Speicherung von Daten ist ein Speicher 45 vorhanden. Der Datenaustausch zwischen den verschiedenen Komponenten des Kraftfahrzeugs 40 erfolgt über ein Netzwerk 46.

### Referenzen

[1] https://de.wikipedia.org/wiki/Kommando_(Entwurfsmuster)

## Patentansprüche

1. Verfahren zum Verarbeiten von Sensordaten (SD) in einem Kraftfahrzeug (40), mit den Schritten:
- Empfangen (10) von Sensordaten (SD);
- Anwenden (11) zumindest eines Algorithmus (A) auf die Sensordaten (SD) zum Ermitteln eines ersten Zwischenergebnisses (E₁);
- Anwenden (12) zumindest einer Regel (Rᵢ) auf das erste Zwischenergebnis (E₁) zum Ermitteln eines zweiten Zwischenergebnisses (E₂);
- Evaluieren (13) des zweiten Zwischenergebnisses (E₂) in Hinblick auf eine Plausibilität;
- falls das zweite Zwischenergebnis (E₂) nicht plausibel ist, Rückgängigmachen (14) einer oder mehrerer der auf das erste Zwischenergebnis (E₁) angewandten Regeln (Rᵢ), bis das zweite Zwischenergebnis (E₂) plausibel ist; und
- Ausgeben (15) des zweiten Zwischenergebnisses (E₂) als Endergebnis (E).

2. Verfahren gemäß Anspruch 1, wobei die Regeln (Rᵢ) zusätzlich zu einer Auswirkung auch eine inverse Auswirkung bereitstellen.

3. Verfahren gemäß Anspruch 1 oder 2, wobei die auf das erste Zwischenergebnis (E₁) angewandten (12) Regeln (Rᵢ) in einer Liste verzeichnet werden.

4. Verfahren gemäß Anspruch 3, wobei die auf das erste Zwischenergebnis (E₁) angewandten (12) Regeln (Rᵢ) in der Liste nach einer Priorität der Regeln (Rᵢ) sortiert sind.

5. Verfahren gemäß Anspruch 4, wobei die Priorität einer Regel (Rᵢ) davon abhängig sein kann, welche anderen Regeln (Rᵢ) angewandt (12) wurden.

6. Verfahren gemäß einem der vorherigen Ansprüche, wobei das Verarbeiten der Sensordaten (SD) für eine assistierte oder automatisierte Fahrfunktion erfolgt.

7. Computerprogramm mit Instruktionen, die bei Ausführung durch einen Computer den Computer zur Ausführung der Schritte eines Verfahrens gemäß einem der Ansprüche 1 bis 6 zum Verarbeiten von Sensordaten in einem Kraftfahrzeug (40) veranlassen.

8. Vorrichtung (20) zum Verarbeiten von Sensordaten in einem Kraftfahrzeug (40), mit
- einem Eingang (21) zum Empfangen (10) von Sensordaten (SD);
- einer Datenverarbeitungseinheit (22) zum Anwenden (11) zumindest eines Algorithmus (A) auf die Sensordaten (SD) zum Ermitteln eines ersten Zwischenergebnisses (E₁) und zum Anwenden (12) zumindest einer Regel (Rᵢ) auf das erste Zwischenergebnis (E₁) zum Ermitteln eines zweiten Zwischenergebnisses (E₂);
- einer Evaluierungseinheit (23) zum Evaluieren (13) des zweiten Zwischenergebnisses (E₂) in Hinblick auf eine Plausibilität, wobei die Datenverarbeitungseinheit (22) eingerichtet ist, falls das zweite Zwischenergebnis (E₂) nicht plausibel ist, eine oder mehrere der auf das erste Zwischenergebnis (E₁) angewandten Regeln (Rᵢ) rückgängig zu machen (14), bis das zweite Zwischenergebnis (E₂) plausibel ist; und
- einem Ausgang (26) zum Ausgeben (15) des zweiten Zwischenergebnisses (E₂) als Endergebnis (E).

9. Assistenzsystem (42) für ein Kraftfahrzeug (40), **dadurch gekennzeichnet, dass** das Assistenzsystem (42) eingerichtet ist, ein Verfahren gemäß einem der Ansprüche 1 bis 6 zum Verarbeiten von Sensordaten (SD) auszuführen.

10. Kraftfahrzeug (40) mit einem Assistenzsystem (42) gemäß Anspruch 9.
